# EUROPÄISCHE PATENTSCHRIFT

(11) **EP 2 670 994 B1**
(45) Veröffentlichungstag und Bekanntmachung des Hinweises auf die Patenterteilung: **07.01.2015**
(21) Anmeldenummer: 12718561.9
(22) Anmeldetag: 26.01.2012
(51) Int. Cl.: F16D 13/75

(54) **KUPPLUNGSVORRICHTUNG**
CLUTCH DEVICE
DISPOSITIF D'EMBRAYAGE

(30) Priorität: 04.02.2011 DE 102011010341
(43) Veröffentlichungstag der Anmeldung: 11.12.2013
(73) Patentinhaber: Schaeffler Technologies GmbH & Co. KG, 91074 Herzogenaurach (DE)
(72) Erfinder: AHNERT, Gerd, 77880 Sasbach (DE); ACKER, Christophe, 67760 Gambsheim (FR)
(86) Internationale Anmeldenummer: PCT/DE2012/000059
(87) Internationale Veröffentlichungsnummer: WO 2012/103866

(56) Entgegenhaltungen:
- WO-A1-2011/147393
- DE-A1-102008 051 100
- DE-A1-102009 055 895
- DE-A1-102010 008 439
- FR-A1- 2 847 626

## Beschreibung

Die vorliegende Erfindung betrifft eine Kupplungsvorrichtung gemäß dem Oberbegriff des Patentanspruchs 1.

Aus der DE 10 2009 035 225 A1 und der DE 10 2010 008439 A1 ist eine Kupplungsvorrichtung gemäß dem Oberbegriff des Patentanspruchs 1 bekannt. Die Kupplungsvorrichtung weist eine in axialer Richtung ein- und ausrückbare, im eingerückten Zustand reibschlüssige Drehmomentübertragungseinrichtung und eine Verschleißnachstelleinrichtung auf. Die Verschleißnachstelleinrichtung beinhaltet einen drehbaren Verstellring und einen auf den Verstellring wirkenden, drehbar gelagerten Spindeltrieb mit einem Antriebsritzel. Darüber hinaus weist die Verschleißnachstelleinrichtung eine mit dem Antriebsritzel in Eingriff bringbare, in axialer Richtung vorgespannte Antriebsanordnung zur Drehung des Spindeltriebs im Verschleißfall auf.

Bei der Verschleißnachstelleinrichtung kommt üblicherweise aus Kostengründen nur ein einziger Spindeltrieb und nur eine einzige Antriebsanordnung, die mit dem Antriebsritzel des Spindeltriebs in formschlüssigen Eingriff bringbar ist, zum Einsatz. Der Spindeltrieb und die Antriebsanordnung sind bezüglich einer Zentralachse, um die die Kupplungsvorrichtung drehbar gelagert ist, exzentrisch angeordnet. Die Vorspannung der Antriebsanordnung ist einer Vorspannung durch Blattfedern, durch die die Drehmomentübertragungseinrichtung ausgerückt wird, das heißt durch die eine Anpressplatte der Drehmomentübertragungseinrichtung von einer Gegendruckplatte der Drehmomentübertragungseinrichtung weg bewegt wird, um den Reibschluss zu einer dazwischen gelagerten Kupplungsscheibe aufzuheben, entgegengerichtet. Da die entgegengerichtete Vorspannkraft der Antriebsanordnung im Gegensatz zur Vorspannkraft der Blattfedern nur an einer Stelle im Umfang der Kupplungsvorrichtung, das heißt punktuell wirkt, besteht beim Ausrücken der Drehmomentübertragungseinrichtung die Gefahr eines Schiefabhubs der Anpressplatte von der Gegendruckplatte bzw. von der Kupplungsscheibe.

Es ist Aufgabe der vorliegenden Erfindung, eine Kupplungsvorrichtung mit einer Verschleißnachstelleinrichtung anzugeben, bei der die Gefahr eines Schiefabhubs beim Ausrücken der Drehmomentübertragungseinrichtung verringert werden kann.

Erfindungsgemäß gelöst wird diese Aufgabe durch eine Kupplungsvorrichtung gemäß Patentanspruch 1 mit zumindest einer in axialer Richtung ein- und ausrückbaren, im eingerückten Zustand reibschlüssigen Drehmomentübertragungseinrichtung und zumindest einer Verschleißnachstelleinrichtung, die zumindest einen drehbaren Verstellring, zumindest einen auf den Verstellring wirkenden, drehbar gelagerten Spindeltrieb mit einem Antriebsritzel sowie zumindest eine mit dem Antriebsritzel in Eingriff bringbare, in axialer Richtung vorgespannte Antriebsanordnung zur Drehung des Spindeltriebs im Verschleißfall aufweist. Die Vorspannkraft der Antriebsanordnung ist stufenförmig ausgebildet, so dass am Anfang eines Ausrückvorgangs der Drehmomentübertragungseinrichtung, das heißt zum Zeitpunkt, wenn Reibpartner der Drehmomentübertragungseinrichtung, wie zum Beispiel Anpressplatte/Kupplungsscheibe oder Kupplungscheibe/Gegendruckplatte, getrennt werden, die durch die Antriebsanordnung punktuell wirkende Gegenkraft geringer ausfällt.

Bevorzugte Ausführungsbeispiele der vorliegenden Erfindung sind in den abhängigen Ansprüchen dargelegt.

Die Drehmomentübertragungseinrichtung weist vorzugsweise zumindest eine Anpressplatte, zumindest eine Gegendruckplatte und zumindest eine in axialer Richtung zwischen der Anpressplatte und der Gegendruckplatte angeordnete Kupplungsscheibe auf, so dass die bereits zuvor erwähnten Reibpaarungen Anpressplatte/Kupplungsscheibe und Kupplungsscheibe/Gegendruckplatte ausbildbar sind. Die Anpressplatte ist drehfest in einem Gehäuse der Kupplungsvorrichtung angeordnet und bezüglich der Gegendruckplatte in axialer Richtung begrenzt verlagerbar, während die Gegendruckplatte gehäusefest angeordnet ist. Wenn die Kupplungsscheibe zwischen der Anpressplatte und der Gegendruckplatte verspannt ist, erfolgt eine reibschlüssige Übertragung des Drehmoments von der Eingangsseite der Kupplungsvorrichtung über die Anpressplatte und die Gegendruckplatte auf die Kupplungsscheibe, und von der Kupplungsscheibe auf die Ausgangsseite der Kupplungsvorrichtung.

Vorzugsweise ist die Kupplungsvorrichtung als normal-eingerückte Kupplungsvorrichtung ausgebildet, das heißt als Kupplung, bei der die Kraft eines einrückenden, als Tellerfeder ausgebildeten Hebelelements, das auf die Anpressplatte wirkt, im betätigungsfreien Zustand die Kraft von ausrückenden Blattfedern, die auf die Anpressplatte wirken, überwiegt. Bei der Betätigung wird die Tellerfeder durch einen Aktuator mit einer Kraft beaufschlagt, durch die die Kupplung ausgerückt wird. Andererseits kann die Kupplungsvorrichtung aber auch als normal-ausgerückte Kupplungsvorrichtung ausgebildet sein, das heißt als Kupplung, bei der die Kraft der ausrückenden Blattfedern, die auf die Anpressplatte wirken, im betätigungsfreien Zustand die Kraft eines als Hebelfeder ausgebildeten Hebelelements, das auf die Anpressplatte wirkt, überwiegt. Bei der Betätigung wird die Hebelfeder durch einen Aktuator mit einer Kraft beaufschlagt, durch die die Kupplung eingerückt wird.

Die Kupplungsvorrichtung kann gleichermaßen als gedrückte Kupplungsvorrichtung, das heißt als Kupplungsvorrichtung, bei der der Aktuator eine drückende Kraft auf die Tellerfeder bzw. die Hebelfeder ausübt, oder als gezogene Kupplungsvorrichtung, das heißt als Kupplungsvorrichtung, bei der der Aktuator eine ziehende Kraft auf die Tellerfeder bzw. Hebelfeder ausübt, ausgebildet sein. Ferner kann die Kupplungsvorrichtung einerseits als Trockenkupplung und andererseits als Nasskupplung ausgebildet sein. Außerdem kann es sich bei der Kupplungsvorrichtung um eine Einfachkupplung oder eine Mehrfachkupplung, insbesondere eine Doppelkupplung, handeln.

Bei der Verschleißnachstelleinrichtung handelt es sich vorzugsweise um eine wegbasierte Verschleißnachstelleinrichtung.

Vorzugsweise weist die Antriebsanordnung zumindest eine Antriebsklinke auf, deren freies Ende mit dem Antriebsritzel in einen im Wesentlichen formschlüssigen Eingriff bringbar ist. "Im Wesentlichen formschlüssiger Eingriff" bedeutet, dass der Eingriff nicht im Sinne eines idealen Formschlusses erfolgen muss, sondern dass die Antriebsklinke und das freie Ende des Antriebsritzels, das in die Zahnstruktur, insbesondere einen Zahngrund der Zahnstruktur der Antriebsklinke, eingreift, auch geringfügig voneinander abweichende Konturen aufweisen können. Darüber hinaus kann der im Wesentlichen formschlüssige Eingriff auch eine kraftschlüssige Komponente beinhalten.

Neben der Antriebsklinke weist die Antriebsanordnung vorzugsweise zumindest eine Vorspannfeder auf, die von der Antriebsklinke zumindest im eingerückten Zustand der Drehmomentübertragungseinrichtung zumindest teilweise beabstandet ist. Durch diese teilweise Beabstandung ist es auf besonders einfache Art und Weise möglich, die Vorspannkraft der gesamten Antriebsanordnung, das heißt die Gegenkraft, die durch Antriebsklinke und Vorspannfeder erzeugt werden kann, stufenförmig auszubilden.

Insbesondere ist es von Vorteil, wenn die Vorspannfeder mit ihrem in radialer Richtung inneren Ende auf einem Federabschnitt der Antriebsklinke aufliegt und mit ihrem in radialer Richtung äußeren Ende vom Federabschnitt der Antriebsklinke zumindest im eingerückten Zustand der Drehmomentübertragungseinrichtung durch einen Anschlag beabstandet ist. Auch hierdurch wird die stufenförmige Ausbildung der Vorspannkraft der Antriebsanordnung begünstigt. Vorzugsweise ist die Vorspannfeder an ihrem in radialer Richtung inneren Ende mit einem Gehäusebauteil der Kupplungsvorrichtung, vorzugsweise einem Gehäusedeckel, verbunden. Darüber hinaus ist es von Vorteil, wenn die Antriebsklinke am in radialer Richtung inneren Ende des Federabschnitts mit dem besagten Gehäusebauteil, insbesondere dem Kupplungsdeckel, verbunden ist. Vorzugsweise erfolgt die Verbindung der Vorspannfeder und des Federabschnitts der Antriebsklinke mit dem Gehäusebauteil, insbesondere dem Gehäusedeckel, durch dasselbe Verbindungsmittel, beispielsweise durch einen Bolzen, vorzugsweise einen Stufenbolzen, ein Niet oder eine Schraube.

Vorzugsweise ist die Vorspannfeder auf einer Außenseite eines Gehäusebauteils der Kupplungsvorrichtung, vorzugsweise eines Gehäusedeckels, angeordnet. Alternativ oder zusätzlich ist es von Vorteil, wenn ein sich im Wesentlichen in radialer Richtung erstreckender Federabschnitt der Antriebsklinke auf einer Außenseite eines Gehäusebauteils der Kupplungsvorrichtung, vorzugsweise eines Gehäusedeckels, angeordnet ist. Somit ist es möglich, dass die Vorspannfeder und/oder der Federabschnitt der Antriebsklinke gegen das besagte Gehäusebauteil, insbesondere gegen den Gehäusedeckel, vorgespannt sind. Die genaue Einstellung der Vorspannkraft kann dabei außerhalb des Gehäuses, das heißt auch noch nach Montage der Kupplungsvorrichtung auf einfache Art und Weise erfolgen.

Gemäß einem weiteren bevorzugten Ausführungsbeispiel erstreckt sich der Anschlag in axialer Richtung durch zumindest eine Durchbrechung oder eine Aussparung in der Antriebsklinke, vorzugsweise im Federabschnitt der Antriebsklinke, hindurch und befindet sich an einem Gehäusebauteil der Kupplungsvorrichtung, vorzugsweise einem Gehäusedeckel, zumindest in Anlage. Der Anschlag kann am radial äußeren Ende der Vorspannfeder befestigt sein, das heißt als separates Bauteil ausgebildet sein, kann jedoch auch als Anschlagsabschnitt einteilig mit der Vorspannfeder ausgebildet sein. Wenn der besagte Anschlag vorspannfederseitig befestigt oder ausgebildet ist, ist er mit dem Gehäusebauteil, wie beispielsweise dem Gehäusedeckel, in Anlage bringbar. "Zumindest in Anlage" bedeutet in diesem Zusammenhang jedoch auch, dass der Anschlag auf Seiten des Gehäusebauteils, insbesondere des Gehäusedeckels, befestigt oder einteilig mit dem Gehäusebauteil, insbesondere dem Gehäusedeckel, ausgebildet sein kann. Dabei ist der Anschlag dann mit dem radial äußeren Ende der Vorspannfeder in Anlage bringbar.

Vorzugsweise ist eine Federhärte der Vorspannfeder in axialer Richtung gleich oder größer als eine Federhärte der Antriebsklinke. Insbesondere ist es von Vorteil, wenn eine Federhärte der Vorspannfeder in axialer Richtung gleich oder größer als eine Federhärte eines Federabschnitts der Antriebsklinke ist. Hierdurch ist es möglich, dass die zweite Stufe der Vorspannkraft größer ausgebildet ist als die erste Stufe. Dies hat den Vorteil, dass die volle Vorspannkraft der Antriebsanordnung in axialer Richtung erst dann punktuell auf die Anpressplatte der Drehmomentübertragungseinrichtung wirkt, wenn der Reibschluss zwischen Anpressplatte und Kupplungsscheibe bzw. zwischen Kupplungsscheibe und Gegendruckplatte bereits aufgehoben ist. Sollte es in dieser Situation aufgrund der punktuell wirkenden Vorspannkraft zu einer Neigung bzw. Schieflage der durch Blattfedern drehfest aufgehängten Anpressplatte kommen, hätte diese Neigung zumindest keine negativen Auswirkungen mehr auf den Reibbelag der Kupplungsscheibe.

Vorzugsweise ist ein antriebsanordnungsseitiger Abstandshalter während einer Ausrückbewegung der Drehmomentübertragungseinrichtung mit einem Anschlagsbereich, der auf Seiten des Verstellrings oder der Drehmomentübertragungseinrichtung ausgebildet ist, in Anlage bringbar. Dieser Anschlagsbereich kann einteilig mit dem Verstellring oder einem Bauteil der Drehmomentübertragungseinrichtung ausgebildet sein, kann jedoch auch als separates Bauteil ausgebildet sein. Beispielsweise ist der Anschlagsbereich als Radialvorsprung in einem Außenumfang des Verstellrings ausgebildet. Der antriebsanordnungsseitige Abstandshalter kann einteilig mit der Antriebsklinke, insbesondere mit einem sich in radialer Richtung erstreckenden Eingriffsbereich der Antriebsklinke, ausgebildet sein, kann jedoch auch als separates Bauteil ausgebildet sein, das beispielsweise um einen Kraftrand eines Hebelelements, das zum Ein- und/oder Ausrücken der Drehmomentübertragungseinrichtung vorgesehen ist, herum gebogen ist.

Alternativ ist es möglich, dass ein antriebsanordnungsseitiger Abstandshalter während einer Ausrückbewegung der Drehmomentübertragungseinrichtung mit einem Kraftrand eines Hebelelements, das zum Ein- und/oder Ausrücken der Drehmomentübertragungseinrichtung vorgesehen ist, in Anlage bringbar ist. Hierbei ist es möglich, den antriebsanordnungsseitigen. Abstandshalter und den Anschlag in einem einzigen Bauteil auszubilden, wodurch die Anzahl der Bauteile der Kupplungsvorrichtung verringert werden kann.

Vorzugsweise ist zumindest im eingerückten Zustand der Drehmomentübertragungseinrichtung ein Abstand zwischen dem antriebsanordnungsseitigen Abstandshalter und dem Anschlagsbereich kleiner oder gleich einem Maximalabstand zwischen der Vorspannfeder und der Antriebsklinke. Dadurch ist es möglich, dass eine Relativbewegung zwischen der Antriebsklinke und dem Antriebsritzel des Spindeltriebs aufgehoben wird, bevor die zweite Stufe der Vorspannkraft wirksam wird.

Vorzugsweise ist es ebenso möglich, dass zumindest im eingerückten Zustand der Drehmomentübertragungseinrichtung ein Abstand zwischen dem antriebsanordnungsseitigen Abstandshalter und dem Kraftrand des Hebelelements größer oder gleich einem Maximalabstand zwischen der Vorspannfeder und der Antriebsklinke ist. Dies ist insbesondere von Vorteil, wenn antriebsanordnungsseitiger Abstandshalter und Anschlag als ein einziges Bauteil ausgebildet sind.

Vorzugsweise erstreckt sich der Anschlag ferner in axialer Richtung durch eine Durchbrechung im Gehäusebauteil der Kupplungsvorrichtung, vorzugsweise im Gehäusedeckel, hindurch und ist mit einem Kraftrand des Hebelelements während einer Ausrückbewegung der Drehmomentübertragungseinrichtung in Anlage bringbar. Anschlag und antriebsanordnungsseitige Abstandshalter sind hierzu vorzugsweise als ein einziges Bauteil ausgebildet. Bei der Betätigung des Hebelelements kann die Betätigungskraft genutzt werden, um die Vorspannfeder weiter abzuheben.

Die vorliegende Erfindung wird nachfolgend anhand von bevorzugten Ausführungsbeispielen in Verbindung mit den zugehörigen Figuren näher erläutert. In diesen zeigen:
- Figur 1: ein erstes Ausführungsbeispiel einer Kupplungsvorrichtung mit einer Drehmomentübertragungseinrichtung und einer Verschleißnachstelleinrichtung in einem Halbschnitt,
- Figur 2: die Kupplungsvorrichtung aus Figur 1 im eingerückten Zustand, wobei die Verschleißnachstelleinrichtung einen Verschleiß sensiert hat,
- Figur 3: die Kupplungsvorrichtung aus Figur 2 im teilweise ausgerückten Zustand,
- Figur 4: die Kupplungsvorrichtung aus Figur 3 im vollständig ausgerückten Zustand,
- Figur 5: die Kupplungsvorrichtung aus Figur 4 im vollständig ausgerückten Zustand, wobei eine Anpressplatte der Drehmomentübertragungseinrichtung in axialer Richtung schwingt,
- Figur 6: ein Weg/Kraft-Diagramm, das einen stufenförmigen Kraftverlauf der Vorspannkraft einer Antriebsanordnung der Verschleißnachstelleinrichtung zeigt, und
- Figur 7: ein zweites Ausführungsbeispiel der Kupplungsvorrichtung.

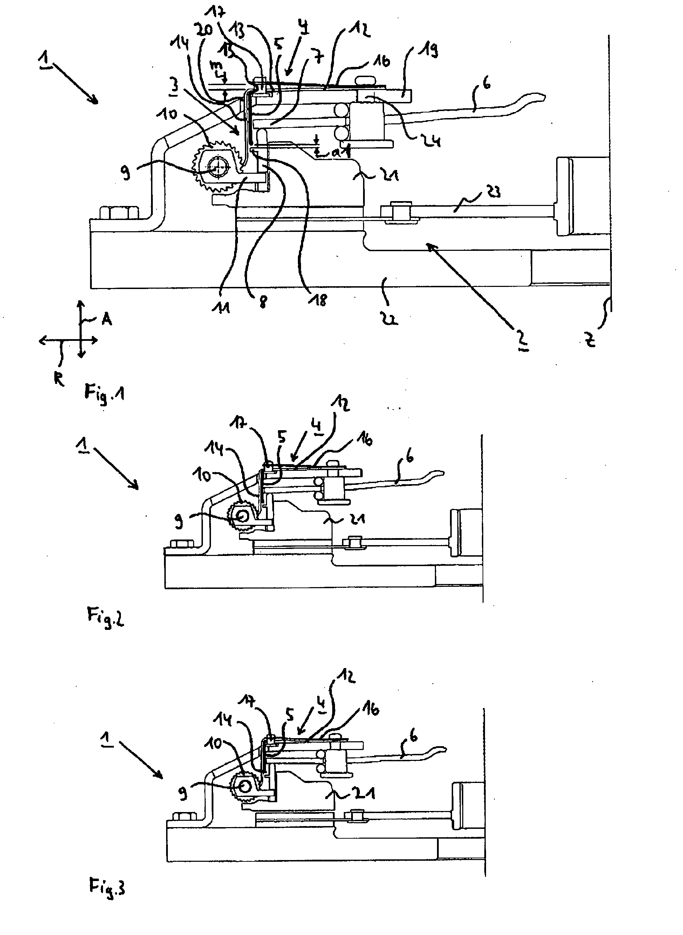

Die Figuren 1 bis 6 betreffen ein erstes Ausführungsbeispiel einer Kupplungsvorrichtung 1. Vorzugsweise handelt es sich bei der Kupplungsvorrichtung 1 um eine normal-eingerückte Einfachkupplung. Beispielsweise kann es sich jedoch auch um eine normal-ausgerückte Teilkupplung einer Doppelkupplung handeln, oder um eine anders aufgebaute oder betätigte Kupplung, wie dies bereits in der Beschreibungseinleitung erläutert worden ist.

Die Kupplungsvorrichtung 1 weist zumindest eine Drehmomentübertragungseinrichtung 2 auf. Die Drehmomentübertragungseinrichtung 2 weist zumindest eine Anpressplatte 21, zumindest eine Gegendruckplatte 22 und zumindest eine, in axialer Richtung A zwischen der Anpressplatte 21 und der Gegendruckplatte 22 angeordnete Kupplungsscheibe 23 auf. Die Kupplungsvorrichtung 1 ist um eine Zentralachse Z drehbar gelagert, wobei die Zentralachse Z auf der rechten Seite des in Figur 1 dargestellten Halbschnitts der Kupplungsvorrichtung 1 als gestrichelte Linie angedeutet ist.

Die Gegendruckplatte 22 der Drehmomentübertragungseinrichtung 2 ist mit zumindest einem Gehäusebauteil der Kupplungsvorrichtung 1 fest verbunden. Insbesondere ist die Gegendruckplatte 22 mit einem Gehäusedeckel 19 verschraubt. Die Anpressplatte 21 ist im Kupplungsgehäuse, insbesondere in axialer Richtung A zwischen dem Gehäusedeckel 19 und der Gegendruckplatte 22, drehfest gelagert und in axialer Richtung A der Kupplungsvorrichtung 1 begrenzt verlagerbar. Insbesondere ist die Anpressplatte 21 mittels mehrerer nicht dargestellter Blattfedern drehfest im Gehäuse befestigt bzw. aufgehängt und von der Gegendruckplatte 22 weg, das heißt mit Bezug auf Figur 1 nach oben, vorgespannt.

Darüber hinaus weist die Kupplungsvorrichtung 1 zumindest ein Hebelelement 6 auf, das bei einer normal-eingerückten Kupplungsvorrichtung 1 als Tellerfeder und bei einer normalausgerückten Kupplungsvorrichtung 1 als Hebelfeder ausgebildet ist. Das Hebelelement 6 ist gehäuseseitig, im dargestellten Ausführungsbeispiel auf Seiten des Gehäusedeckels 19, abgestützt und durch einen nicht dargestellten, auf in radialer Richtung R innen liegende Spitzen des Hebelelements 6 wirkenden Aktuator betätigbar. Die Abstützung des Hebelelements 6 am Gehäusedeckel 19 erfolgt mittels einer oder mehrerer Lagereinrichtungen, die beispielsweise zwei in Umfangsrichtung der Kupplungsvorrichtung 1 verlaufende Drahtringe beinhalten, zwischen denen das Hebelelement 6 in axialer Richtung A kippbar gelagert ist. Darüber hinaus beinhaltet die Lagereinrichtung beispielsweise Bolzen 24, die insbesondere als Stufenbolzen ausgebildet sind, und durch die die Drahtringe am Gehäusedeckel 19 gehalten werden. Über einen Verstellring 8, der einer Verschleißnachstelleinrichtung 3, vorzugsweise einer wegbasierten Verschleißnachstelleinrichtung, auf die im Folgenden eingegangen wird, zuzuordnen ist, wirkt das Hebelelement 6 mittelbar auf die Anpressplatte 21.

Bei einer normal-eingerückten Kupplungsvorrichtung 1 überwiegt die wirksame Kraft des als Tellerfeder ausgebildeten Hebelelements 6 die Gegenkraft der Blattfedern, während bei einer normal-ausgerückten Kupplungsvorrichtung 1 die Gegenkraft der Blattfedern die wirksame Kraft des als Hebelfeder ausgebildeten Hebelelements 6 überwiegt. Dementsprechend führt eine Betätigung der Tellerfeder einer normal-eingerückten Kupplungsvorrichtung 1 zum Ausrücken der Kupplungsvorrichtung 1, das heißt zum Abhub der Anpressplatte 21 und zur Entfernung der Anpressplatte 21 von der Gegendruckplatte 22, während eine Betätigung der Hebelfeder bei einer normal-ausgerückten Kupplungsvorrichtung 1 zum Einrücken der Kupplungsvorrichtung 1 führt.

Bei eingerückter Kupplung wird ein Drehmoment von der Eingangsseite der Kupplungsvorrichtung 1, beispielsweise von einem Zweimassenschwungrad, über das Gehäuse und sowohl die Gegendruckplatte 22 als auch die Anpressplatte 21, die beide mit dem Gehäuse drehfest verbunden sind, reibschlüssig auf die Kupplungsscheibe 23 übertragen. Von der Kupplungsscheibe 23, die reibschlüssig zwischen der Gegendruckplatte 22 und der Anpressplatte 21 geklemmt ist, wird das Drehmoment zur Ausgangsseite der Kupplungsvorrichtung 1 übertragen, beispielsweise zu einer Eingangswelle eines Getriebes.

Da aufgrund des Reibschlusses sowohl die Reibflächen der Gegendruckplatte 22 und der Anpressplatte 21 als auch die Reibbeläge der Kupplungsscheibe 23 einem Verschleiß unterworfen sind, muss über die Lebensdauer der Kupplungsvorrichtung 1 die Anpressplatte 21 immer näher an die Gegendruckplatte 22 heranbewegt werden, um die Abnahme der Stärke der Reibflächen und der Dicke der Reibbeläge in axialer Richtung A zu kompensieren bzw. die Drehmomentübertragungseinrichtung 2 einrücken zu können. Hierzu ist in der Kupplungsvorrichtung 1 die bereits zuvor erwähnte Verschleißnachstelleinrichtung 3 vorzugsweise als wegbasierte Verschleißnachstelleinrichtung ausgebildet.

Die Verschleißnachstelleinrichtung 3 weist eine Antriebsanordnung 4 auf, die unter anderem eine Antriebsklinke 12 und eine auf die Antriebsklinke 12 wirkende Vorspannfeder 16 beinhaltet. Vorzugsweise ist die Antriebsanordnung 4 mit dem Gehäuse bzw. dem Gehäusedeckel 19 verbunden und zumindest in axialer Richtung A elastisch gegen ein Antriebsritzel 10 eines Spindeltriebs 9 vorgespannt. Ein Radialabschnitt der Antriebsanordnung 4 erstreckt sich vorzugsweise auf einer Außenseite des Gehäuses bzw. des Gehäusedeckels 19, so dass die Vorspannung der Antriebsanordnung 4 vorzugsweise auch in axialer Richtung A gegen das Gehäuse bzw. den Gehäusedeckel 19 erfolgt.

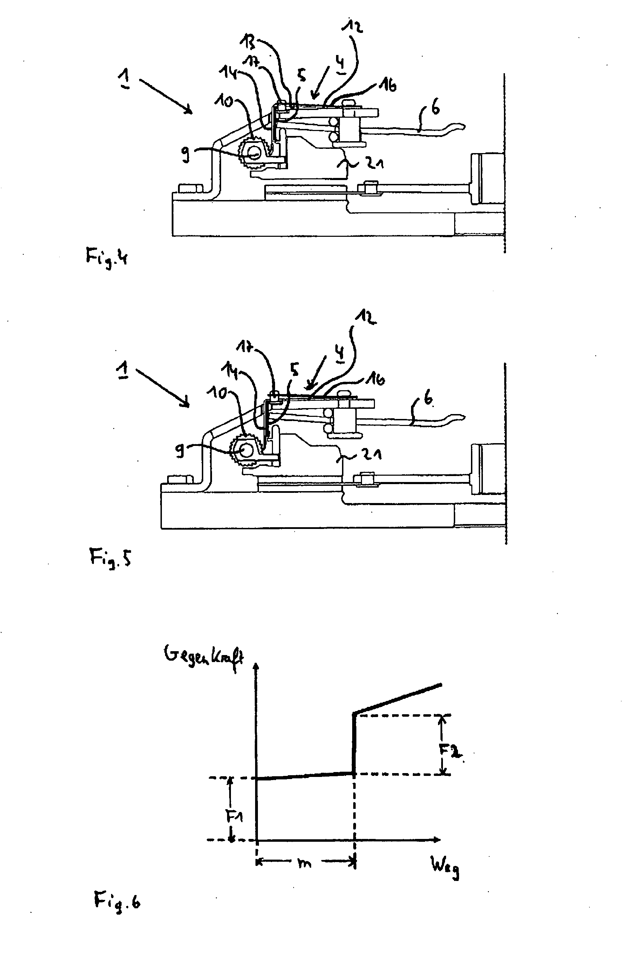

Die Antriebsanordnung 4 kann mit dem Antriebsritzel 10 des Spindeltriebs 9 in einen im Wesentlichen formschlüssigen Eingriff gebracht werden, um den Spindeltrieb 9 über das drehfest auf dem Spindeltrieb 9 angeordnete Antriebsritzel 10 im Verschleißfall zu verdrehen. Die Vorspannkraft der Antriebsanordnung 4 ist stufenförmig ausgebildet, wie dies im Weg/KraftDiagramm in Figur 6 dargestellt ist.

Die Antriebsklinke 12 der Antriebsanordnung 4 ist vorzugsweise einteilig, beispielsweise als Blechbauteil, ausgebildet. Die Antriebsklinke 12 weist einen Federabschnitt 13 auf, der sich im in Figur 1 dargestellten Ausführungsbeispiel im Wesentlichen in radialer Richtung R der Kupplungsvorrichtung 1 außerhalb des Gehäuses, insbesondere des Gehäusedeckels 19, erstreckt. In Abhängigkeit von der Außenkontur des Gehäusedeckels 19 und/oder von der Vorspannung des Federabschnitts 13 ist es auch möglich, dass der Federabschnitt 13 bezüglich einer Radialebene leicht geneigt ist. Der Federabschnitt 13 geht in einen Eingriffsabschnitt 14 der Antriebsklinke 12 über. Der Eingriffsabschnitt 14 verläuft in dem in Figur 1 dargestellten Ausführungsbeispiel im Wesentlichen in axialer Richtung A der Kupplungsvorrichtung 1.

Durch eine Durchbrechung 20 im Gehäusedeckel 19 erstreckt sich die Antriebsklinke 12, genauer gesagt der Eingriffsabschnitt 14 der Antriebsklinke 12, von der Außenseite des Kupplungsgehäuses ins Innere des Kupplungsgehäuses und in Richtung des Antriebsritzels 10.

Ein freies Ende der Antriebsklinke 12, insbesondere des Eingriffsabschnitts 14, ist in einen im Wesentlichen formschlüssigen Eingriff mit dem Antriebsritzel 10 des Spindeltriebs 9 bringbar. Um während der Betätigung der Kupplungsvorrichtung 1 das freie Ende des Eingriffsabschnitts 14 im Kontakt mit einer Mantelfläche des Antriebsritzels 10 zu halten, ist es von Vorteil, wenn der Eingriffsabschnitt 14 zusätzlich zur Vorspannung in axialer Richtung A durch den Federabschnitt 13 auch in radialer Richtung R gegen das Antriebsritzel 10 vorgespannt ist.

Der Spindeltrieb 9, auf dem das Antriebsritzel 10 drehfest montiert ist, ist durch zumindest einen Spindelhalter 11 drehbar auf Seiten der Anpressplatte 21 gelagert, wobei der Spindelhalter 11 beispielsweise mit einer der Kupplungsscheibe 23 abgewandten Seite der Anpressplatte 21 verbunden, insbesondere verschraubt oder vernietet, ist.

Das Antriebsritzel 10 ist auf seiner Mantelfläche mit einer Zahnstruktur versehen, die eine bestimmte Teilung aufweist. Das freie Ende des Eingriffsabschnitts 14 ist ausgebildet, im Wesentlichen formschlüssig in die Zahnstruktur eingreifen zu können. Vorzugsweise weist hierzu das freie Ende beispielsweise einen Bereich auf, der in radialer Richtung R der Kupplungsvorrichtung 1 zum Antriebsritzel 10 vorspringt. Begünstigt werden kann der Eingriff durch die bereits erwähnte Vorspannung in radialer Richtung R. Um eine feinstufige Verschleißnachstelleinrichtung zu ermöglichen, ist es möglich, dass die Antriebsklinke 12 mehrere Eingriffsabschnitte 14 unterschiedlicher Länge aufweist, wobei der Längenunterschied in einem Bereich liegt, der kleiner als die Teilung der Zahnstruktur ist.

Über eine Spindelmutter ist der Spindeltrieb 9 mit dem Verstellring 8 verbunden, wobei eine Drehbewegung des Spindeltriebs 9 in eine translatorische Bewegung der Spindelmutter umgesetzt wird, und die translatorische Bewegung der Spindelmutter in eine Drehbewegung des Verstellrings 8 umgesetzt wird. Vorzugsweise ist der Verstellring 8 als Rampenring ausgebildet. Die Rampen des Verstellrings 8 sind gleitbeweglich auf Gegenrampen angeordnet, die auf der der Kupplungsscheibe 23 abgewandten Seite der Anpressplatte 21 ausgebildet sind, vorzugsweise in die Anpressplatte 21 eingelassen sind.

Eine den Rampen- und Gegenrampen in axialer Richtung A gegenüber liegende Fläche des Verstellrings 8 befindet sich idealerweise sowohl während der Einrückung als auch während der Ausrückung der Drehmomentübertragungseinrichtung 2 in Anlage mit einem Kraftrand 7 des Hebelelements 6. Diese Fläche wird nachfolgend als hebelelementseitige Anlagefläche bezeichnet.

Wird die Drehmomentübertragungseinrichtung 2 bzw. die Kupplungsvorrichtung 1 eingerückt, bewegt sich die Anpressplatte 21 auf die Gegendruckplatte 22 zu, das heißt mit Bezug auf Figur 1 nach unten. Hierbei gleitet das freie Ende der Antriebsklinke 12 bzw. des Eingriffsabschnitts 14 der Antriebsklinke 21 über eine Zahnflanke des Antriebsritzels 10. Liegt ein hinreichender Kupplungsverschleiß vor, muss sich die Anpressplatte 21 weiter auf die Gegendruckplatte 22 zu bewegen, so dass schließlich das freie Ende der Antriebsklinke 12 die auf die Zahnflanke folgende Zahnspitze überspringt.

Beim anschließenden Ausrücken der Kupplungsvorrichtung 1 rastet das freie Ende der Antriebsklinke 12 in den der übersprungenen Zahnspitze folgenden Zahngrund ein. Während der Ausrückbewegung, das heißt während die Anpressplatte 21 sich mit Bezug auf Figur 1 nach oben bewegt, treibt die Antriebsklinke 12 das Antriebsritzel 10 mit Bezug auf Figur 1 im Uhrzeigersinn an. Mit dem Antriebsritzel 10 dreht sich auch der Spindeltrieb 9, der die Drehbewegung in eine translatorische Bewegung der Spindelmutter umsetzt. Durch die translatorisch bewegte Spindelmutter wird der Verstellring 8 gedreht, so dass sich die Rampen des Verstellrings 8 an den in die Anpressplatte 21 eingelassenen Gegenrampen hoch bewegen. Hierdurch vergrößert sich der Abstand zwischen der hebelelementseitigen Anlagefläche des Verstellrings 8 und der Anpressplatte 21 so weit, bis der Kupplungsverschleiß bezogen auf den Kraftrand 7 des Hebelelements 6 wegmäßig kompensiert worden ist.

Um beim Ausrücken der Drehmomentübertragungseinrichtung 2 den Relativweg zwischen dem Antriebsritzel 10 und der Antriebsklinke 12 zu begrenzen, weist die Antriebsanordnung 4 vorzugsweise einen antriebsanordnungsseitigen Abstandshalter 5 auf, dessen freies Ende ab einem bestimmten Ausrückweg bzw. Lüftweg mit einem Anschlagsbereich 18 in Anlage kommt. Der Anschlagsbereich 18 ist beispielsweise in einem Außenumfang des Verstellrings 8 als Radialvorsprung angeordnet und einteilig mit dem Verstellring 8 ausgebildet. Der antriebsanordnungsseitige Abstandshalter 5 kann einteilig mit der Antriebsklinke 12 ausgebildet sein, kann jedoch auch als separates Bauteil ausgebildet sein, wie dies in Figur 1 dargestellt ist.

In diesem Ausführungsbeispiel ist der antriebsanordnungsseitige Abstandshalter 5 im Wesentlichen parallel zum Eingriffsabschnitt 14 der Antriebsklinke 12 angeordnet und im Bereich des Federabschnitts 13 der Antriebsklinke 12 mit der besagten Antriebsklinke 12 verbunden. Vorzugsweise ist der antriebsanordnungsseitige Abstandshalter 5 als streifenförmiges, separates Bauteil, beispielsweise als Blechbauteil, ausgebildet und erstreckt sich in axialer Richtung A durch die Durchbrechung 20 im Gehäusedeckel 19 hindurch. Der Anschlag 17 kommt in der Nähe der Durchbrechung 20 auf der Außenseite des Gehäusedeckels 19 zur Anlage.

Eine Begrenzung des Relativwegs zwischen Antriebsritzel 10 und Antriebsklinke 12 durch den antriebsanordnungsseitigen Abstandshalter 5 ist insbesondere dann sinnvoll, wenn die Gefahr besteht, dass im ausgerückten Zustand der Kupplungsvorrichtung 1 die Anpressplatte 21 aufgrund von Axialschwingungen noch weiter von der Gegendruckplatte 22 wegschwingt. In diesem Fall wird eine ungewollte Verschleißnachstellung oder eine ungewollte, weitere Verschleißnachstellung dadurch unterdrückt, dass die Antriebsklinke 12 der Axialschwingung der Anpressplatte 21 und des auf der Anpressplatte 21 drehbar gelagerten Spindeltriebs 9 folgt. Insbesondere führt dies im in Figur 1 dargestellten Ausführungsbeispiel zu einem Abheben des Federabschnitts 13 der Antriebsklinke 12 von einer Außenseite des Gehäusedeckels 19.

Darüber hinaus besteht bereits beim Abhub der Anpressplatte 21 von der Kupplungsscheibe 23 und bei der Entfernung der Anpressplatte 21 von der Gegendruckplatte 22 die Gefahr, dass es zu einem Schiefabhub kommt, da die axiale Vorspannung der Antriebsanordnung 4 als Gegenkraft, insbesondere im Falle von beim vorangegangenen Einrücken sensiertem Verschleiß, über den Spindeltrieb 9 exzentrisch und nur punktuell auf die Anpressplatte 21 wirkt.

Daher ist es von Vorteil, wenn die Vorspannkraft der Antriebsanordnung 4 stufenförmig ausgebildet ist, so dass am Anfang des Ausrückvorgangs eine verringerte Vorspannkraft in axialer Richtung A wirksam ist, und die volle Vorspannkraft in axialer Richtung A erst während der Ausrückbewegung, insbesondere erst wenn die Reibpaarungen Anpressplatte 21/Kupplungsscheibe 23 und Kupplungsscheibe 23/Gegendruckplatte 22 im teilausgerückten Zustand der Kupplungsvorrichtung 1 getrennt sind, wirksam wird.

Hierzu weist die Antriebsanordnung 4 zusätzlich die bereits erwähnte Vorspannfeder 16 auf, die wie der Federabschnitt 13 der Antriebsklinke 12 vorzugsweise auf der Außenseite des Gehäusedeckels 19 angeordnet ist. Die Vorspannfeder 16 ist von der Antriebsklinke 12, genauer gesagt vom Federabschnitt 13 der Antriebsklinke 12, zumindest im eingerückten Zustand der Drehmomentübertragungseinrichtung 2 zumindest teilweise beabstandet. Insbesondere ist es hierbei von Vorteil, wenn die Vorspannfeder 16 mit ihrem in radialer Richtung R inneren Ende auf dem Federabschnitt 13 der Antriebsklinke 12 aufliegt.

Im dargestellten Ausführungsbeispiel sind das radial innere Ende der Vorspannfeder 16 und das radial innere Ende des Federabschnitts 13 der Antriebsklinke 12 durch den Bolzen 24 mit dem Gehäusedeckel 19 verbunden. Gleichermaßen dient dieser Bolzen 24, der vorzugsweise als Stufenbolzen ausgebildet ist, auf der anderen Seite des Gehäusedeckels 19, das heißt im Inneren des Kupplungsgehäuses, der Lagerung des Hebelelements 6 durch die beiden Drahtringe.

Mit ihrem in radialer Richtung R äußeren Ende ist die Vorspannfeder 16 vom Federabschnitt 13 der Antriebsklinke 12 zumindest im eingerückten Zustand der Drehmomentübertragungseinrichtung 2 durch einen Anschlag 17 beabstandet, wobei dieser Abstand im eingerückten Zustand der Drehmomentübertragungseinrichtung 2 nachfolgend als Maximalabstand m bezeichnet wird.

In der Darstellung in Figur 1 ist im eingerückten Zustand der Drehmomentübertragungseinrichtung 2 ein Abstand a1 zwischen dem antriebsanordnungsseitigen Abstandshalter 5 und dem verstellringseitigen Anschlagsbereich 18 kleiner als der Maximalabstand m zwischen der Vorspannfeder 16 und der Antriebsklinke 12. Es ist jedoch auch möglich, dass der Abstand a1 und der Maximalabstand m im Wesentlichen gleich groß sind.

Der Anschlag 17 ist im dargestellten Ausführungsbeispiel am radial äußeren Ende der Vorspannfeder 16 befestigt und erstreckt sich in axialer Richtung A. Es ist jedoch auch möglich, dass Vorspannfeder 16 und Anschlag 17 als ein einziges Bauteil ausgebildet sind. Ebenso ist es möglich, dass der Anschlag 17 statt mit der Vorspannfeder 16 mit dem Gehäusedeckel 19 verbunden oder einteilig mit diesem ausgebildet ist.

Im Bereich des Anschlags 17 weist der Federabschnitt 13 der Antriebsklinke 12 eine Durchbrechung 15 auf, durch die sich der Anschlag 17 in axialer Richtung A hindurch erstreckt, um mit dem darunter liegenden Gehäusedeckel 19 unter Vorspannung durch die Vorspannfeder 16 in Anlage zu kommen. Anstelle der Durchbrechung 15 kann die Antriebsklinke 12 auch eine Aussparung, beispielsweise in Form eines Einschnitts, in ihrer Außenkontur aufweisen.

Vorzugsweise ist die Federhärte der Vorspannfeder 16 in axialer Richtung A gleich oder größer als die Federhärte der Antriebsklinke 12 in axialer Richtung. Insbesondere ist es von Vorteil, wenn die Federhärte der Vorspannfeder 16 in axialer Richtung A gleich oder größer als die Federhärte des Federabschnitts 13 der Antriebsklinke 12 in axialer Richtung A ist. Der Anschlagsbereich 18, mit dem das freie Ende des antriebsanordnungsseitigen Abstandshalters 5 während der Ausrückbewegung der Drehmomentübertragungseinrichtung 2 in Anlage bringbar ist, kann einerseits auf Seiten des Verstellrings 8 ausgebildet sein, kann andererseits jedoch auch auf Seiten der Drehmomentübertragungseinrichtung 2 ausgebildet sein.

Mit Bezug auf die Figuren 2 bis 5 wird nachfolgend der Ausrückvorgang der Kupplungsvorrichtung 1 bei sensiertem Verschleiß erläutert. Beim vorangegangenen Einrückvorgang der Kupplungsvorrichtung 1 hat das freie Ende des Eingriffsabschnitts 14 der Antriebsklinke 12 eine Zahnspitze des Antriebsritzels 10 übersprungen und ist im auf die Zahnspitze folgenden Zahngrund eingerastet.

Diese Ausgangssituation am Betriebspunkt der Kupplungsvorrichtung 1 ist in Figur 2 dargestellt. In dieser Situation ist mit Bezug auf Figur 6 die erste Stufe der Vorspannkraft der Antriebsanordnung 4 wirksam. Die Gegenkraft, die der Vorspannkraft F1 der Antriebsklinke 12 gegen den Gehäusedeckel 19 entspricht, muss zusätzlich durch die ausrückenden Blattfedern aufgebracht werden, so dass die Vorspannkraft F1 möglichst gering zu bemessen ist.

Durch Betätigung des im dargestellten Ausführungsbeispiel als Tellerfeder ausgebildeten Hebelelements 6 gelangt die Kupplungsvorrichtung 1 in einen teilweise ausgerückten Zustand, der in Figur 3 dargestellt ist. Dabei werden innen liegende Spitzen der Tellerfeder mit Bezug auf Figur 3 nach unten gedrückt, so dass unter Abstützung an den Drahtringen der Lagereinrichtung der Kraftrand der Tellerfeder mit Bezug auf Figur 3 nach oben bewegt wird, und die Anpressplatte 21 zusammen mit dem Verstellring 8 und dem Spindeltrieb 9 durch die vorgespannten Blattfedern nach oben bewegt wird. Mit Bezug auf Figur 6 bedeutet dies, dass das radial äußere Ende des Federabschnitts 13 der Antriebsklinke 12 um einen dem Maximalabstand m entsprechenden Weg von der Außenseite des Gehäusedeckels 19 wegbewegt wird, da das freie Ende des Eingriffsabschnitts 14 der Antriebsklinke 12 durch die Verschleißsensierung im Zahngrund eingerastet ist.

In diesem Zustand wird dann die zweite Stufe der Vorspannkraft der Antriebsanordnung 4 wirksam, das heißt die Vorspannkraft F2, mit der die Vorspannfeder 16 gegen den Gehäusedeckel 19 vorgespannt ist. Mit Bezug auf Figur 6 bedeutet dies, dass nach Zurücklegen des Wegs m in Figur 3 durch die Blattfedern nun die Gegenkraft zur vollen Vorspannkraft F1 + F2 aufgebracht werden muss.

Dies ist unkritisch, da die Reibpaarungen Anpressplatte 21/Kupplungsscheibe 23 und Kupplungsscheibe 23/Gegendruckplatte 22 im teilweise ausgerückten Zustand bereits getrennt sind, das heißt der Abhub bereits erfolgt ist. Ferner ist in dieser Situation die Klemmkraft des Hebelements 6 auf den Verstellring 8 bereits abgebaut, so dass der Verstellring 8 sofort durch den sich unter Wirkung derAntriebsanordnung 5 drehenden Spindeltrieb 9 verdreht werden kann.

Der Vollständigkeit halber sei erwähnt, dass im Falle, dass beim vorangegangenen Einrücken der Kupplungsvorrichtung 1 kein Verschleiß sensiert worden wäre, das freie Ende des Eingriffsabschnitts 14 der Antriebsklinke 12 im der Figur 3 entsprechenden, teilweise ausgerückten Zustand über die Zahnflanke des Antriebsritzels 10 gleiten würde und das radial äußere Ende des Federabschnitts 13 der Antriebsklinke 12 nicht von der Außenseite des Gehäusedeckels 19 abgehoben werden würde. Nur die Vorspannkraft F1, dass heißt die erste Stufe der Vorspannkraft der Antriebsanordnung 4, wäre wirksam. Im teilweise ausgerückten Zustand würde der verstellringseitige Anschlagsbereich 18 mit dem freien Ende des antriebsanordnungsseitigen Abstandshalters 5 bereits in Anlage kommen, um ungewollte Verdrehungen aufgrund von Relativbewegungen zu vermeiden.

In Figur 4 wird der vollständig ausgerückte Zustand der Drehmomentübertragungseinrichtung 2 erreicht. In diesem Zustand kommt auch der verstellringseitige Anschlagsbereich 18 mit dem freien Ende des antriebsanordnungsseitigen Abstandshalters 5 in Anlage, um ungewollte, weitere Verdrehungen zu vermeiden.

In Figur 5 erfährt die Anpressplatte 21 eine Axialschwingung und schwingt zusammen mit dem Verstellring 8 und dem Spindeltrieb 9 in Richtung Kupplungsscheibe 23 bzw. Gegendruckplatte 22, wobei die Tellerfeder in ihrem betätigten Zustand verbleibt. Somit hebt sich die tellerfederseitige Anlagefläche des Verstellrings 8 vom Kraftrand der Tellerfeder ab. In dieser Situation erfolgt keine ungewollte Verschleißsensierung, da der mit der Vorspannkraft F1 vorgespannte Federabschnitt 13 der Antriebsklinke 12 sich auf den Gehäusedeckel 19 zu bewegt, so dass das freie Ende des Eingriffsabschnitts 14 unter der Vorspannkraft F1 dem Antriebsritzel 10 folgen und bei Anlage des Federabschnitts 13 am Gehäusedeckel 19 gegebenenfalls an der Zahnflanke entlang gleiten kann, ohne die folgende Zahnspitze zu überspringen.

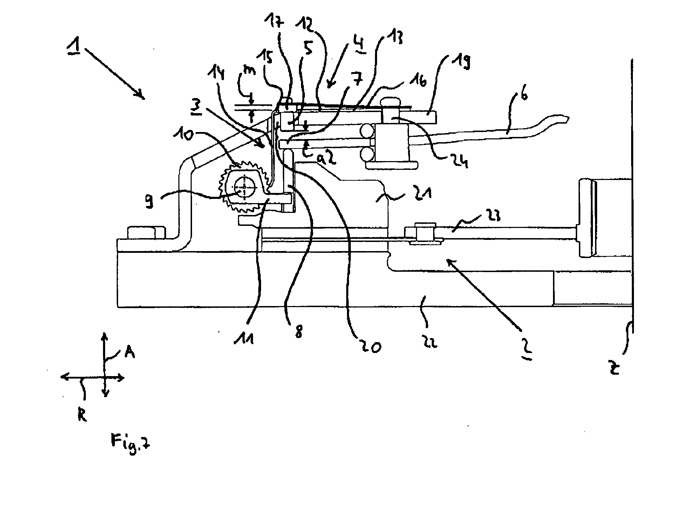

In Figur 7 ist ein zweites Ausführungsbeispiel der Kupplungsvorrichtung 1 dargestellt. Um Wiederholungen zu vermeiden, wird nachfolgend nur auf die Unterschiede zum ersten Ausführungsbeispiel eingegangen, wobei gleiche Bezugszeichen gleiche Merkmale kennzeichnen.

Im Unterschied zum ersten Ausführungsbeispiel ist die Durchbrechung 20, die im Gehäusedeckel 19 vorgesehen ist, größer ausgebildet, da durch sie nicht nur der in axiale Richtung A verlaufende Eingriffsabschnitt 14 der Antriebsklinke 12 hindurchreicht, sondern auch der bolzenförmig ausgebildete, antriebsanordnungsseitige Abstandshalter 5. Das freie Ende des antriebsanordnungsseitigen Abstandshalters 5 ist mit der der Kupplungsscheibe 23 abgewandten Seite des Kraftrands 7 des Hebelelements 6 in Anlage bringbar, so dass im ausgerückten Zustand der Drehmomentübertragungseinrichtung 2 der Kraftrand 7 des Hebelelements 6 zwischen der hebelelementseitigen Anlagefläche des Verstellrings 8 und dem antriebsanordnungsseitigen Abstandshalter 5 klemmbar ist. Somit ist der Anschlagsbereich 18 mit dem Kraftrand 7 des Hebelelements 6 zum Ein- und/oder Ausrücken der Drehmomentübertragungseinrichtung 2 in Anlage bringbar. Auf einen Radialvorsprung im Außenumfang des Verstellrings 8, wie dies mit Bezug auf das erste Ausführungsbeispiel in Figur 1 dargestellt ist, kann somit verzichtet werden.

Vorzugsweise sind Anschlag 17 und antriebsanordnungsseitiger Abstandshalter 5 als ein Bauteil ausgebildet, wobei der Anschlag 17 beispielsweise einen Vorsprung oder einen größeren Durchmesser als der antriebsanordnungsseitige Abstandshalter 5 aufweist, um mit einer Auβenseite des Gehäusedeckels 19 in Anlage zu kommen. Durch die einteilige Ausbildung kann auf einen separaten, antriebsanordnungsseitigen Abstandshalter 5, wie dies mit Bezug auf das erste Ausführungsbeispiel in Figur 1 dargestellt ist, verzichtet werden.

Vorzugsweise ist zumindest im eingerückten Zustand der Drehmomentübertragungseinrichtung 2 ein Abstand a2 zwischen dem antriebsanordnungsseitigen Abstandshalter 5 und dem Kraftrand 7 des Hebelelements 6 größer als der Maximalabstand m zwischen der Vorspannfeder 16 und der Antriebsklinke 12. Jedoch ist es auch möglich, dass der Abstand a2 und der Maximalabstand m im Wesentlichen gleich sind.

Die Betätigung sowie die Verschleißsensierung und -nachstellung der Kupplungsvorrichtung 1 des zweiten Ausführungsbeispiels erfolgt der Kupplungsvorrichtung 1 des ersten Ausführungsbeispiels entsprechend.

Die vorangegangenen Ausführungsbeispiele betreffen eine Kupplungsvorrichtung 1 mit zumindest einer in axialer Richtung A ein- und ausrückbaren, im eingerückten Zustand reibschlüssigen Drehmomentübertragungseinrichtung 2 und zumindest einer Verschleißnachstelleinrichtung 3, die zumindest einen drehbaren Verstellring 8, zumindest einen auf den Verstellring 8 wirkenden, drehbar gelagerten Spindeltrieb 9 mit einem Antriebsritzel 10 sowie zumindest eine mit dem Antriebsritzel 10 in Eingriff bringbare, in axialer Richtung A vorgespannte Antriebsanordnung 4 zur Drehung des Spindeltriebs 9 im Verschleißfall aufweist, wobei die Vorspannkraft der Antriebsanordnung 4 stufenförmig ausgebildet ist. Obwohl die vorangegangenen Ausführungsbeispiele nur eine zweistufige Ausbildung der Vorspannkraft der Antriebsanordnung 4 betreffen, ist es auch möglich, die Vorspannkraft der Antriebsanordnung mehrstufig, das heißt mit mehr als zwei Stufen, auszubilden.

### Bezugszeichenliste

- 1: Kupplungsvorrichtung
- 2: Drehmomentübertragungseinrichtung
- 3: Verschleißnachstelleinrichtung
- 4: Antriebsanordnung
- 5: antriebsanordnungsseitiger Abstandshalter
- 6: Hebelelement
- 7: Kraftrand
- 8: Verstellring
- 9: Spindeltrieb
- 10: Antriebsritzel
- 11: Spindelhalter
- 12: Antriebsklinke
- 13: Federabschnitt
- 14: Eingriffsabschnitt
- 15: federabschnittseitige Durchbrechung
- 16: Vorspannfeder
- 17: Anschlag
- 18: Anschlagsbereich
- 19: Gehäusedeckel
- 20: gehäusedeckelseitige Durchbrechung
- 21: Anpressplatte
- 22: Gegendruckplatte
- 23: Kupplungsscheibe
- 24: Bolzen
- A: axiale Richtung
- R: radiale Richtung
- Z: Zentralachse
- m: Maximalabstand
- a1: Abstand
- a2: Abstand
- F1: Vorspannkraft der Antriebsklinke gegen Gehäusedeckel
- F2: Vorspannkraft der Vorspannfeder gegen Gehäusedeckel

## Patentansprüche

1. Kupplungsvorrichtung (1) mit zumindest einer in axialer Richtung (A) ein- und ausrückbaren, im eingerückten Zustand reibschlüssigen Drehmomentübertragungseinrichtung (2) und zumindest einer Verschleißnachstelleinrichtung (3), die zumindest einen drehbaren Verstellring (8), zumindest einen auf den Verstellring (8) wirkenden, drehbar gelagerten Spindeltrieb (9) mit einem Antriebsritzel (10) sowie zumindest eine mit dem Antriebsritzel (10) in Eingriff bringbare, in axialer Richtung (A) elastisch gegen das Antriebsritzel (10) vorgespannte Antriebsanordnung (4) zur Drehung des Spindeltriebs (9) im Verschleißfall aufweist, **dadurch gekennzeichnet, dass** die Vorspannkraft der Antriebsanordnung (4) stufenförmig ausgebildet ist.

2. Kupplungsvorrichtung (1) nach Anspruch 1, wobei die Antriebsanordnung (4) zumindest eine Antriebsklinke (12), deren freies Ende mit dem Antriebsritzel (10) in einen im Wesentlichen formschlüssigen Eingriff bringbar ist, und zumindest eine Vorspannfeder (16) aufweist, die von der Antriebsklinke (12) zumindest im eingerückten Zustand der Drehmomentübertragungseinrichtung (2) zumindest teilweise beabstandet ist.

3. Kupplungsvorrichtung (1) nach Anspruch 2, wobei die Vorspannfeder (16) mit ihrem in radialer Richtung (R) inneren Ende auf einem Federabschnitt (13) der Antriebsklinke (12) aufliegt und mit ihrem in radialer Richtung (R) äußeren Ende vom Federabschnitt (13) der Antriebsklinke (12) zumindest im eingerückten Zustand der Drehmomentübertragungseinrichtung (2) durch einen Anschlag (17) beabstandet ist.

4. Kupplungsvorrichtung (1) nach Anspruch 2 oder 3, wobei die Vorspannfeder (16) und/oder ein Federabschnitt (13) der Antriebsklinke (12) auf einer Außenseite eines Gehäusebauteils der Kupplungsvorrichtung (1), vorzugsweise eines Gehäusedeckels (19), angeordnet ist.

5. Kupplungsvorrichtung (1) nach Anspruch 3 oder 4, wobei der Anschlag (17) sich in axialer Richtung (A) durch zumindest eine Durchbrechung (15) oder eine Aussparung in der Antriebsklinke (12), vorzugsweise im Federabschnitt (13) der Antriebsklinke (12), hindurcherstreckt und sich an einem Gehäusebauteil der Kupplungsvorrichtung (1), vorzugsweise einem Gehäusedeckel (19), zumindest in Anlage befindet.

6. Kupplungsvorrichtung (1) nach zumindest einem der Ansprüche 2 bis 5, wobei eine Federhärte der Vorspannfeder (16) in axialer Richtung (A) gleich oder größer als eine Federhärte der Antriebsklinke (12), vorzugsweise eine Federhärte eines Federabschnitts (13) der Antriebsklinke (12), in axialer Richtung (A) ist.

7. Kupplungsvorrichtung (1) nach zumindest einem der Ansprüche 1 bis 6, wobei ein antriebsanordnungsseitiger Abstandshalter (5) während einer Ausrückbewegung der Drehmomentübertragungseinrichtung (2) mit einem Anschlagsbereich (18), der auf Seiten des Verstellrings (8) oder der Drehmomentübertragungseinrichtung (2) ausgebildet ist, oder mit einem Kraftrand (7) eines Hebelelements (6) zum Ein- und/oder Ausrücken der Drehmomentübertragungseinrichtung (2) in Anlage bringbar ist.

8. Kupplungsvorrichtung (1) nach Anspruch 7, wobei der antriebsanordnungsseitige Abstandshalter (5) sich in axialer Richtung (A) durch eine Durchbrechung (20) im Gehäusebauteil der Kupplungsvorrichtung (1), vorzugsweise im Gehäusedeckel (19), hindurcherstreckt.

9. Kupplungsvorrichtung (1) nach Anspruch 7 oder 8, wobei zumindest im eingerückten Zustand der Drehmomentübertragungseinrichtung (2) ein Abstand (a1) zwischen dem antriebsanordnungsseitigen Abstandshalter (5) und dem Anschlagsbereich (18) kleiner oder gleich einem Maximalabstand (m) zwischen der Vorspannfeder (16) und der Antriebsklinke (12) ist.

10. Kupplungsvorrichtung (1) nach Anspruch 7 oder 8, wobei zumindest im eingerückten Zustand der Drehmomentübertragungseinrichtung (2) ein Abstand (a2) zwischen dem antriebsanordnungsseitigen Abstandshalter (5) und dem Kraftrand (7) des Hebelelements (6) größer oder gleich einem Maximalabstand (m) zwischen der Vorspannfeder (16) und der Antriebsklinke (12) ist.

## Claims

1. Clutch device (1), with at least one torque transfer arrangement (2) which is engageable and disengageable in the axial direction (A) and makes frictional connection in the engaged state and at least one wear adjustment arrangement (3) which has at least one rotatable adjusting ring (8), at least one rotatably mounted spindle drive (9) acting upon the adjusting ring (8) and having a drive pinion (10), and at least one drive arrangement (4), capable of being meshed with the drive pinion (10) and prestressed elastically in the axial direction (A) against the drive pinion (10), for rotating the spindle drive (9) in the event of wear, **characterized in that** the prestressing force of the drive arrangement (4) is of stepped form.

2. Clutch device (1) according to Claim 1, the drive arrangement (4) having at least one drive pawl (12), the free end of which can be meshed essentially positively with the drive pinion (10), and at least one prestressing spring (16) which is at least partially spaced apart from the drive pawl (12) at least in the engaged state of the torque transfer arrangement (2).

3. Clutch device (1) according to Claim 2, the prestressing spring (16) lying with its radially (R) inner end on a spring portion (13) of the drive pawl (12) and, at least in the engaged state of the torque transfer arrangement (2), being spaced apart with its radially (R) outer end from the spring portion (13) of the drive pawl (12) by means of a stop (17).

4. Clutch device (1) according to Claim 2 or 3, the prestressing spring (16) and/or a spring portion (13) of the drive pawl (12) being arranged on an outside of a housing component of the clutch device (1), preferably of a housing cover (19).

5. Clutch device (1) according to Claim 3 or 4, the stop (17) extending in the axial direction (A) through at least one perforation (15) or clearance in the drive pawl (12), preferably in the spring portion (13) of the drive pawl (12), and being at least in bearing contact on the housing component of the clutch device (1), preferably on a housing cover (19).

6. Clutch device (1) according to at least one of Claims 2 to 5, a spring hardness of the prestressing spring (16) in the axial direction (A) being equal to or greater than a spring hardness of the drive pawl (12), preferably a spring hardness of a spring portion (13) of the drive pawl (12), in the axial direction (A).

7. Clutch device (1) according to at least one of Claims 1 to 6, a spacer (5) located on the drive-arrangement side being capable, during a disengaging movement of the torque transfer arrangement (2), of being brought into bearing contact with a stop region (18), which is formed on sides of the adjusting ring (8) or on sides of the torque transfer arrangement (2), or with a force margin (7) of a lever element (6) for the engagement and/or disengagement of the torque transfer arrangement (2).

8. Clutch device (1) according to Claim 7, the spacer (5) located on the drive-arrangement side extending in the axial direction (A) through a perforation (20) in the housing component of the clutch device (1), preferably in the housing cover (19).

9. Clutch device (1) according to Claim 7 or 8, at least in the engaged state of the torque transfer arrangement (2) a distance (a1) between the spacer (5) located on the drive-arrangement side and the stop region (18) being smaller than or equal to a maximum distance (m) between the prestressing spring (16) and the drive pawl (12).

10. clutch device (1) according to Claim 7 or 8, at least in the engaged state of the torque transfer arrangement (2) a distance (a2) between the spacer (5) located on the drive-arrangement side and the force margin (7) of the lever element (6) being greater than or equal to a maximum distance (m) between the prestressing spring (16) and the drive pawl (12).

## Revendications

1. Dispositif d'embrayage (1) comprenant au moins un dispositif de transfert de couple (2) pouvant être embrayé et débrayé dans la direction axiale (A), à engagement par friction dans l'état embrayé et au moins un dispositif de rattrapage d'usure (3) qui présente au moins une bague de réglage rotative (8), au moins un entraînement à broche (9) monté à rotation, agissant sur la bague de réglage (8), avec un pignon d'entraînement (10) et au moins un agencement d'entraînement (4) précontraint élastiquement contre le pignon d'entraînement (10) dans la direction axiale (A), pouvant être amené en prise avec le pignon d'entraînement (10), pour faire tourner l'entraînement à broche (9) en cas d'usure, **caractérisé en ce que** la force de précontrainte de l'agencement d'entraînement (4) est réalisée sous forme étagée.

2. Dispositif d'embrayage (1) selon la revendication 1, dans lequel l'agencement d'entraînement (4) présente au moins un cliquet d'entraînement (12) dont l'extrémité libre peut être amenée en prise essentiellement par correspondance de formes avec le pignon d'entraînement (10), et au moins un ressort de précontrainte (16) qui est au moins en partie espacé du cliquet d'entraînement (12) au moins dans l'état embrayé du dispositif de transfert de couple (2).

3. Dispositif d'embrayage (1) selon la revendication 2, dans lequel le ressort de précontrainte (16) s'applique avec son extrémité interne dans la direction radiale (R) sur une portion de ressort (13) du cliquet d'entraînement (12) et est espacé par une butée (17), avec son extrémité extérieure dans la direction radiale (R), de la portion de ressort (13) du cliquet d'entraînement (12), au moins dans l'état embrayé du dispositif de transfert de couple (2).

4. Dispositif d'embrayage (1) selon la revendication 2 ou 3, dans lequel le ressort de précontrainte (16) et/ou une portion de ressort (13) du cliquet d'entraînement (12) sont disposés sur un côté extérieur d'un composant de boîtier du dispositif d'embrayage (1), de préférence d'un couvercle de boîtier (19).

5. Dispositif d'embrayage (1) selon la revendication 3 ou 4, dans lequel la butée (17) s'étend dans la direction axiale (A) à travers au moins un orifice (15) ou un évidement dans le cliquet d'entraînement (12), de préférence dans la portion de ressort (13) du cliquet d'entraînement (12), et est au moins en appui contre un composant de boîtier du dispositif d'embrayage (1), de préférence un couvercle de boîtier (19).

6. Dispositif d'embrayage (1) selon au moins l'une quelconque des revendications 2 à 5, dans lequel une dureté de ressort du ressort de précontrainte (16) dans la direction axiale (A) est supérieure ou égale à une dureté de ressort du cliquet d'entraînement (12), de préférence une dureté de ressort d'une portion de ressort (13) du cliquet d'entraînement (12), dans la direction axiale (A).

7. Dispositif d'embrayage (1) selon au moins l'une quelconque des revendications 1 à 6, dans lequel un élément d'espacement (5) du côté de l'agencement d'entraînement peut être amené en appui pendant un mouvement de débrayage du dispositif de transfert de couple (2) avec une région de butée (18) qui est réalisée du côté de la bague de réglage (8) ou du côté du dispositif de transfert de couple (2), ou avec un bord de force (7) d'un élément de levier (6) pour l'embrayage et/ou le débrayage du dispositif de transfert de couple (2).

8. Dispositif d'embrayage (1) selon la revendication 7, dans lequel l'élément d'espacement (5) du côté de l'agencement d'entraînement s'étend dans la direction axiale (A) à travers un orifice (20) dans le composant de boîtier du dispositif d'embrayage (1), de préférence dans le couvercle de boîtier (19).

9. Dispositif d'embrayage (1) selon la revendication 7 ou 8, dans lequel au moins dans l'état embrayé du dispositif de transfert de couple (2), une distance (a1) entre l'élément d'espacement (5) du côté de l'agencement d'entraînement et la région de butée (18) est inférieure ou égale à une distance maximale (m) entre le ressort de précontrainte (16) et le cliquet d'entraînement (12).

10. Dispositif d'embrayage (1) selon la revendication 7 ou 8, dans lequel au moins dans l'état embrayé du dispositif de transfert de couple (2), une distance (a2) entre l'élément d'espacement (5) du côté de l'agencement d'entraînement et le bord de force (7) de l'élément de levier (6) est supérieure ou égale à une distance maximale (m) entre le ressort de précontrainte (16) et le cliquet d'entraînement (12).
